# EUROPEAN PATENT APPLICATION

(11) **EP 4 818 738 A1**
(43) Date of publication of application: **07.10.2026**
(21) Application number: 25167458.6
(22) Date of filing: 31.03.2025
(51) Int. Cl.: G01S 5/02, G01S 5/12, G01S 3/74

(54) **RECEIVER DEVICE FOR ESTIMATING A FIRST TIME OF ARRIVAL OF A MULTI PATH SIGNAL AND METHOD**

(71) Applicant: AUMOVIO Germany GmbH, 60488 Frankfurt am Main (DE)
(72) Inventor: Sahinbas, Burak, 30175 Hannover (DE); Rasp, Franziska, 30175 Hannover (DE); Reisinger, Thomas, 30175 Hannover (DE); Schneider, Christian, 30175 Hannover (DE)
(74) Representative: Aumovio Corporation

(57) **Abstract**

The invention is concerned with a receiver device (10) for estimating a first time of arrival of a multi path signal. The invention is characterized in that the receiver device (10) comprises a polarimetric antenna array (12) and a controller device (11) comprising a first estimator (20), a signal decomposer (22), a time of arrival estimator (24) and a first time of arrival identifier (26); the polarimetric antenna array (12) is configured to receive the multi path signal; the first estimator (20) is configured to estimate a respective polarization and/or a respective angle of arrival of path components of the multi path signal received by the receiver device (10); the signal decomposer (22) is configured to decompose the multi path signal into isolated single path signals of the respective path components of the multi path signal; the time of arrival estimator (24) is configured to estimate a time of arrival of each of the isolated single path signals, and the identifier is configured to identify the minimum time of arrival.

## Description

The invention is concerned with a receiver device for estimating a first time of arrival of a multi path signal and a method to operate a receiver device.

A radio-based localization is considered, where there exist transmitter (Tx) and receiver (Rx) anchors. An anchor is a unit having a Tx or Rx radio system, with a possibility of occupying multiple antennas in an array formation. The Rx anchor attempts to localize the Tx anchor with respect to its own local coordinate system in this scenario. The radio-based localization concept could be characterized by two fundamental parameters.

The first parameter is the time-of-arrival (ToA) of the propagating signal, which is the propagation time of the signal from the Tx until the Rx. The knowledge of speed-of-wave is known and constant under considered medium of interest, therefore estimation of ToA is equivalent to the estimation of distance between the Tx and Rx anchors.

The second parameter is the angle-of-arrival (AoA), which is the relative direction of the propagating signal, which is impinging towards the Rx anchor. Estimation of AoA and ToA of the signal is therefore equivalent to relatively estimate the location of the Tx anchor, with respect to the Rx anchor.

The environment that is considered yields existence of multi-path (MP) propagation. The MP propagation stands for reception of shifted and scaled (and possibly modified in shape) signals, which are created by reflections. These reflections are called multi-path components (MPCs). Typically, a major MP is existing, together with the original signal coming from the Tx anchor, which is referred as the line-of-sight (LoS) signal. We equally consider the terminology, LoS, as the direct signal path from Tx to Rx anchors. The LoS path has a unique marker such that it is the first arriving signal among all impinging signals. Therefore, under MP scenarios, the target of the localization algorithm is to detect and localize the first arriving signal path. Thus, estimation of AoA and ToA of the first arriving signal is the target of the radio-based localization application. The quality of the localization is therefore related to separability of the LoS and MPCs, which is the resolution of the considered framework.

The prior art attempts to resolve the LoS component for the localization, as explained above. Therefore, the resolution is the key to evaluate the prior art. To be specific, when a joint estimation of AoA and Toa is considered, the resolution for the localization is defined based on the Rx anchor's resolution capability under each domain individually stating that the LoS signal could be resolved under any of these domains of interest under the scope of the localization in a MP environment.

We consider each parameter as follows: The conventional ToA estimation uses the time domain of the signal and attempts a peak detection of the measured Rx signal in time domain directly. Fundamentally, the resolution of ToA is proportional with signal BW. Assuming that the signal is measured in frequency domain, an inverse Fourier Transform (IFT) is applied to transform the signal to time domain to build the ToA spectrum.

The fundamental ToA spectrum is therefore the base methodology to detect the peaks occurring in this spectrum. The first arrival is therefore the first estimated peak. We refer IFT based ToA estimation to such spectral approaches. The conventional AoA estimation uses the spatial properties of the signal observed by an antenna array and attempting to build a spectrum over the AoA of the impinging signals. This is referred as the Spatial domain Fourier Based AoA estimation. The target is to use the receiver antenna array elements as spatial samples of the signal environment; thus, a Fourier transformation is applied directly to the antenna group. Eventually, a spectrum is established, where the AoAs of the impinging signals could be extracted by a peak detection over the spectrum.

It is in fact, analogous of the IFT method in time domain, introduced above. The prior art is to deploy large antenna arrays, to achieve a better resolution over the AoA spectrum. As an enhancement, such antenna arrays may have in addition distinctly polarized antenna elements, that the polarization estimation of the impinging signals could be considered in the joint estimation framework.

For the context of the first path estimation, the AoA domain alone is not providing the LoS component directly. Therefore, combined with the ToA domain IFT methods, it is used to jointly estimate the AoA and ToA of the signal. The AoA domain is especially effective, when there exist large receiving arrays (possibly polarimetric in addition for polarization estimation as stated) such that the ToA resolution is not enough, but AoA resolution is established due to presence of the large antenna array. Then, the first path is as well detectable, even if a limited resolution of ToA domain is available.

Methods according to the state of the art are disclosed in the following publications.
J. Li and R. T. Compton, "Angle and polarization estimation using ESPRIT with a polarization sensitive array," IEEE Transactions on Antennas and Propagation, vol. 39, no. 9, pp. 1376-1383, Sep. 1991, doi: 10.1109/8.99047.
G. Ziyang and X. Yong, "Direction of arrival estimation for conformal arrays with diverse polarizations," in 2015 12th IEEE International Conference on Electronic Measurement & Instruments (ICEMI), Jul. 2015, pp. 439-442. doi: 10.1109/ICEMI.2015.7494229.
S. Liu, F. Yan, M. Jin, and X. Qiao, "An improved polarization and DOA estimation algorithm," in 2016 IEEE International Conference on Microwave and Millimeter Wave Technology (ICMMT), Jun. 2016, pp. 1009-1011. doi: 10.1109/ICMMT.2016.7762516.
M. G. Pralon, L. G. Pralon, D. Neudert-Schulz, and R. S. Thomä, "On the performance of real dual-polarized antenna arrays for 2D unconditional Direction of Arrival estimation," in 2016 10th European Conference on Antennas and Propagation (EuCAP), Apr. 2016, pp. 1-5. doi: 10.1109/EuCAP.2016.7481698.
G. Zheng and B. Wu, "Polarisation smoothing for coherent source direction finding with multiple-input and multiple-output electromagnetic vector sensor array," IET Signal Processing, vol. 10, no. 8, pp. 873-879, 2016, doi: 10.1049/ietspr.2015.0535.
C. Liu, S. Xiang, L. Xu, and Z. Fang, "Polarization and DOA Estimation Based on Dual-Polarized Conformal Array," International Journal of Antennas and Propagation, vol. 2019, no. 1, p. 8907685, 2019, doi: 10.1155/2019/8907685.

The drawback with conventional method is, it requires large antenna arrays. Overall, for the cases where resolution of the system is problematic, super-resolution methods are available in prior art.

A generic example is ToA estimation (or AoA) using MUSIC. The super-resolution methods outperform the spectral methods defined above, but they have a major drawback. Presence of MP signals implies that the arriving signals are summed scaled copies of the LOS signal referred as the MP signals. Therefore, each arrival is correlated, and such algorithms require smoothing methods for resolving correlated signals. As any MPC is a correlated signal to LOS signal, to effectively smooth the system, the available BW or available number of antennas are sacrificed. In this prior art, the smoothing is therefore decreasing the available BW and the available number of antennas for superresolution methods. Typically, such redundancies are allocated to the designed localization systems, if available, to overcome the MP signal problem. Assuming that an effective smoothing is happened, the resolution and first path estimation capability of MUSIC, for instance, is superior to conventional methods, as expected.

For the 5G sidelink, a 20MHz signal bandwidth is available to localization algorithms. Also, car applications require compact antenna arrays, due to space limitations. Due to these constraints, the problems with the prior art as follows can be associated as follows.

Problem with IFT: The resolution of IFT based method is considerably weak since the available signal BW is not creating a narrow pulse and time domain resolution for our case of interest. As a remark, the signal could be measured directly in time domain, but equivalent statements on BW holds. Some examples are as follows:
Example 1: f=5.9 GHz, B=20 MHz --> delta d < 15m, Error_max ~ 15m (5G Sidelink)
Example 2: f=2.4 GHz, B=80 MHz --> delta d < 3.75m, Error_max ~3. 75m (ISM Wifi)
Example 3: f=8.0 GHz, B=500 MHz --> delta d < 0.6m, Error_max ~ +/0.6m (UWB) V2X specs require sub-meter accuracy, which would be not achievable for 5G Sidelink with IFT.

Problem with Super-Resolution (MUSIC, or equivalently any variant): Multi-path environment implies that the arriving signals are fully correlated. It requires smoothing for decorrelation. Without decorrelation, MUSIC will fail to estimate TOAs. Only two sources of smoothing are available in state of the art, which are the spatial and the frequency domain smoothing techniques. With 20MHz, we do not have enough frequency bandwidth to effectively decorrelate the arrivals. The reason is that we also need frequency samples to estimate using MUSIC, and we need to share the available samples between estimation and smoothing, where we have a band-width problem accordingly. Also, with the aperture size that we occupy, we also have a weak decorrelation and is not enough for joint estimation. V2X specs require sub-meter accuracy, which is not achievable for 5G Sidelink super-resolution estimation under decorrelation capabilities that we have.

It is an objective of the present invention to provide a multipath decomposition for enhanced Time-of-Arrival detection using compact polarimetric antenna arrays.

The objective is accomplished by the subject matter of the independent claims. Advantageous developments with convenient and non-trivial further embodiments of the invention are specified in the dependent claims, the following description, and the drawings.

A first aspect of the present invention relates to a receiver device for estimating a first time of arrival of a multi path signal. The receiver device is configured to receive a signal and to analyze a polarization state of the signal. The polarization of the signal refers to the orientation of the electric field vector of the signal, which can be linear, circular, or elliptical.

The receiver device comprises a polarimetric antenna array and a controller device. The controller device comprises a first estimator, a signal decomposer, a time of arrival estimator and a first time of arrival identifier. The controller device may comprise an electronic control circuit.

The polarimetric antenna array is configured to receive the multi path signal. The polarimetric antenna array comprises antenna elements that are designed to receive signals with specific polarization states. As an example, the polarimetric antenna array may comprise cross dipole antenna devices as polarimetric antenna devices that consists of two antenna elements arranged as orthogonal dipoles oriented in perpendicular planes. Each of the antenna elements may be connected to a respective antenna port of the controller device to provide the signal received by the antenna element to the controller device.

The first estimator is configured to receive the multi path signal received by the polarimetric antenna array. The multi path signal comprises the signals received by the antenna elements of the polarimetric antenna device. The first estimator is configured to estimate a respective polarization and/or a respective angle of arrival of path components of the multi path signal received by the polarimetric antenna device. In other words, the multi path signal comprises the path components that relate to respective paths between a signal source and the polarimetric antenna array. The path components comprise a line-of-sight path component and one or more multi path components. The line of sight path is a direct path between the signal source and the polarimetric antenna array, wherein the multi path components relate to reflected paths between the signal source and the polarimetric antenna array. Each of the path components has a respective angle of arrival and a respective polarization. The first estimator is configured to identify the path components of the multi path signal and to estimate the respective angle of arrival and the respective polarization of the path components.

The signal decomposer is configured to decompose the multi path signal into isolated single path signals of the respective path components of the multi path signal. In other words, for further analysis, the signal decomposer is configured to decompose the multi path signal comprising the path components related the respective paths. The signal decomposer is configured to isolate the single paths signals related to the respective paths from the multi path signal. The isolation is performed based on the angle of arrival and the polarization of the respective path components.

The time of arrival estimator is configured to estimate a time of arrival of each of the isolated single path signals. In other words, the time of arrival estimator is configured to receive the respective isolated single path signals generated by the signal decomposer. The time of arrival estimator is configured to estimate for each of the isolated single path signals a respective time of arrival.

The first time of arrival identifier is configured to identify the minimum time of arrival. In other words, the identifier is configured to receive the time of arrival of the respective isolated single path signals. The first time of arrival identifier is configured to identify the minimum time of arrival of the time of arrivals. As the line of sight component is related to the smallest time of arrival, the identifier is configured to identify the line of sight component of the multipath signal. The other path components of the multipath signals can be identified as multipath components of the multipath signal. The control device may be configured to provide a signal, comprising the first time of arrival at an output port.

The present invention has the advantage that the time of arrival of the line of sight path may be determined in a multipath signal of a bandwidth too small for methods according to the state of the art.

The invention also comprises embodiments that provide additional technical advantages.

According to a further embodiment of the present invention, the first estimator is configured to generate a capon spectrum of the multi path signal over the polarization and the angle of arrival using a capon beam former. The first estimator is configured to identify the path components by a peak search algorithm applied on the capon spectrum. In other words, the receiver device includes a first estimator that is configured to generate a Capon spectrum of the multipath signal over the polarization and angle of arrival. The first estimator generates the Capon spectrum of the multipath signal over the polarization and angle of arrival by computing a spatial covariance matrix of the received multipath signal. The Capon beamformer then applies a weighting function to this covariance matrix to form a set of beams that are steered towards different directions and polarization states. By taking the inverse of the covariance matrix and multiplying it with the beams, the Capon spectrum is obtained, which provides an estimate of the power spectral density of the multipath signal at each direction and polarization state. Once the Capon spectrum is generated, the first estimator identifies the path components by applying a peak search algorithm on the spectrum. The peaks in the spectrum correspond to the dominant signal components, which can be associated with the different paths. By identifying these peaks, the first estimator can estimate the polarization and angle of arrival of each path component, as well as their corresponding power or amplitude.

This further embodiment provides a robust and accurate method for estimating the polarization and angle of arrival of multipath signals in complex environments. The Capon beamformer allows for improved spatial resolution and interference suppression, while the peak search algorithm enables the identification and estimation of the path components.

According to a further embodiment of the present invention, the first estimator is configured to generate a Multiple Signal Classification spectrum of the multi path signal over the polarization and the angle of arrival using a Multiple Signal Classification algorithm and to identify the path components by a peak search algorithm applied on the Multiple Signal Classification spectrum. In other words, the first estimator is configured to generate a Multiple Signal Classification (MUSIC) spectrum of the multipath signal over the polarization and angle of arrival using a MUSIC algorithm. The MUSIC algorithm is a subspace-based that uses the eigenvalue decomposition of the covariance matrix of the multi path signal to separate a signal subspace from a noise subspace. By doing so, it can identify the directions of arrival of the path components and their polarization states.

The MUSIC spectrum is a function of the DOAs and polarizations, which shows the spatial distribution of a signal power of the multi path signal. Peaks in the MUSIC spectrum correspond to the DOAs and polarizations of the path components, allowing them to be identified. Therefore, the first estimator is further configured to identify the path components by a peak search algorithm applied on the MUSIC spectrum. This means that the estimator uses a search algorithm to find the peaks in the MUSIC spectrum that correspond to the DOAs and polarizations of the path components. These peaks are then identified as the path components of the multipath signal, providing information about their spatial and polarization characteristics.

According to a further embodiment of the present invention, the first estimator is configured to generate a covariance matrix of the multi path signal, wherein the first estimator is configured to allocate a whole bandwidth of the multi path signal for smoothing the multi path signal to generate the covariance matrix of the multi path signal. In other words, the first estimator is configured to allocate the whole bandwidth of the multipath signal for smoothing the multipath signal to generate the covariance matrix. This means that the estimator uses all of the available frequency components of the multipath signal to compute the covariance matrix. By doing so, the estimator captures a more complete picture of the statistical properties of the multipath channel, including the spatial correlations between different antennas and the time correlations between different delays.

The smoothing process may involve averaging an outer product of the multi path signal over time or frequency to reduce the noise and interference in the estimate of the covariance matrix. By allocating the whole bandwidth of the multipath signal for smoothing, the estimator ensures that all of the available information is used to compute the covariance matrix.

Allocating the entire frequency bandwidth for smoothing the multi-path signal means using all of the available signal bandwidth of the multi-path signal for smoothing, as opposed to using a narrower frequency sub-band of the entire frequency bandwidth for smoothing as is commonly done.

In common smoothing techniques, only a portion of the frequency bandwidth is selected and used for smoothing, while the remaining frequency bandwidth is not utilized. This may lead to incomplete decorrelation of the multi-path signal, especially if the correlation between the signals varies across the frequency range. By contrast, allocating the entire frequency bandwidth for smoothing allows for a more comprehensive reduction of signal correlation by taking into account the variations in the correlation across the entire frequency range of the bandwidth. This results in a more accurate estimate of the covariance matrix.

According to a further embodiment of the present invention, the signal decomposer is configured to decompose the multi path signal into isolated single path signals of the respective path components of the multi path signal by applying a spatial polarimetric digital filter, which places a null in the direction and polarization state of the other path components of the multipath signal, while placing a unity gain for the direction and polarization state of the respective path component. This effectively isolates the single path signal corresponding to each path component, allowing for accurate estimation of their properties.

The spatial polarimetric digital filter is designed based on the estimated angle of arrival and polarization of each path component. The filter places a null in the direction of the other path components by selecting the weights that minimize the power contribution from those directions. At the same time, the filter places a unity gain in the direction of the respective path component to preserve its signal strength.

According to a further embodiment of the present invention, the polarimetric antenna array comprises two cross dipole antenna devices arranged in a 1x2 array convention, wherein each of the two cross dipole antenna devices comprises two antenna elements of respective polarizations. In other words, the polarimetric antenna array consists of a 1x2 array of two cross dipole antenna devices, where each device comprises two antenna elements with orthogonal polarizations.

The two cross dipole antenna devices comprise four antenna elements arranged in a cross shape, with two antenna elements parallel to the x-axis and two antenna elements parallel to the y-axis. The cross dipole antenna devices may be configured to measure horizontal and vertical components of the electric field vector of the multi path signal. By combining the signals of the two orthogonal polarizations, the respective cross dipole antenna device may determine the polarization state of the respective signal.

In the 1x2 array configuration, the two cross dipole antenna devices may be arranged side by side to form a linear array. The two cross dipole antenna devices may be oriented with their x-axis antenna elements pointing in a same direction and their y-axis antenna elements pointing in a same direction. The two cross dipole antenna devices in the 1x2 array may be identical and may have orthogonal polarizations. One antenna element measures the horizontal component of the electric field vector, while the other antenna element measures the vertical component.

A further aspect of the present invention relates to a method to operate a receiver device for estimating a first time of arrival of a multi path signal. The method comprises the following steps.

The method comprises a step of receiving the multi path signal by a polarimetric antenna array of the receiver device. The method comprises a step of estimating a respective polarization and/or a respective angle of arrival of path components of the multi path signal by a first estimator of the receiver device. The method comprises a step of decomposing the multi path signal into isolated single path signals of the respective path components of the multi path signal by a signal decomposer of the receiver device. The method comprises a step of estimating a time of arrival of each of the isolated single path signals by a time of arrival estimator of the receiver device. The method comprises a step of identifying the minimum time of arrival by an identifier of the receiver device.

A further aspect of the present invention relates to a receiver device for estimating the first time of arrival (TOA) of a multipath signal. The receiver device comprises a polarimetric antenna device, a polarimetric filter device, a TOA estimator, and a first TOA identifier.

The polarimetric antenna device is configured to receive the multipath signal. The polarimetric antenna device is configured to measure the polarization state of the incoming multipath signal. The polarimetric antenna device may be a cross-dipole antenna or a patch antenna with polarization sensitivity. The polarimetric filter device is configured to decompose the multipath signal into isolated single path signals of respective polarization angles. The polarimetric filter device separates the incoming multipath signal into multiple single path signals of respective polarizations. The TOA estimator is configured to estimate the time of arrival of each isolated single path signal. The first TOA identifier identifies the minimum TOA from all the estimated TOAs of the single path signals. The identified minimum TOA corresponds to the direct path signal, which is the first signal to arrive at the polarimetric antenna device. By identifying the first TOA, the receiver device can estimate the distance between the transmitter and receiver, providing information about their spatial location and separation.

A further aspect of the present invention relates to a method to operate a receiver device for estimating a first time of arrival of a multi path signal. The method comprises the following steps.

The method comprises a step of receiving the multi path signal by a polarimetric antenna device of the receiver device. The method comprises a step of decomposing the multi path signal into isolated single path signals of respective polarization angles by a polarimetric filter device of the receiver device. The method comprises a step of estimating a time of arrival of each of the isolated single path signals by a time of arrival estimator. The method comprises a step of identifying the minimum time of arrival by an identifier.

For use cases or use situations which may arise in the methods and which are not explicitly described here, it may be provided that, in accordance with the methods, an error message and/or a prompt for user feedback is output and/or a default settings and/or a predetermined initial state is set.

The invention also comprises the combinations of the features of the described embodiments.

In the following an exemplary implementation of the invention is described. The figures show:
Fig. 1 a schematic illustration of an embodiment of the receiver device for estimating a first time of arrival of a multi path signal;
Fig. 2 a schematic illustration of an exemplary spectrum of the multipath signal over the angle of arrival and the polarization;
Fig. 3 a schematic illustration of the amplitudes of two single path signals in a time domain;
Fig. 4 a schematic illustration of a MSE based performance comparison;
Fig. 5 shows a schematic illustration of a comparison between Simulation results with 20MHz bandwidth and 80MHz bandwidth;
Fig. 6 a schematic illustration of a method to operate a receiver device for estimating a first time of arrival of a multi path signal;
Fig. 7 a schematic illustration of an embodiment of the receiver device for estimating a first time of arrival of a multi path signal; and
Fig. 8 a schematic illustration of a method to operate a receiver device for estimating a first time of arrival of a multi path signal.

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figures elements that provide the same function are marked with identical reference signs.

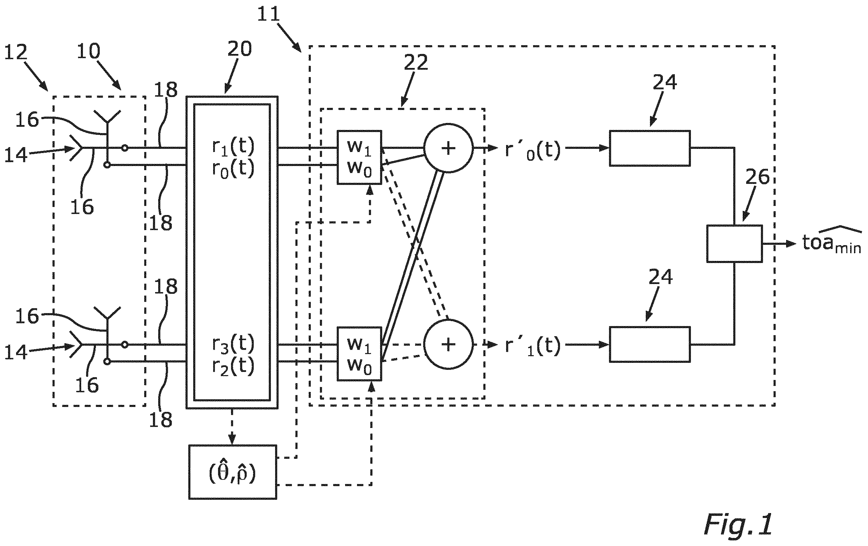

Fig. 1 shows a schematic illustration of an embodiment of the receiver device 10 for estimating a first time of arrival of a multi path signal.

The receiver device 10 may comprise a polarimetric antenna array 12 and a controller device 11. The polarimetric antenna array 12 may be configured to receive the multi path signal and to provide it to the controller device 11 which may be configured to analyze the multi path signal. The controller device 11 may comprise a first estimator 20, a signal decomposer 22, a time of arrival estimator 24 and a first time of arrival identifier 26.

The polarimetric antenna array 12 may be configured to receive the multi path signal. The polarimetric antenna array 12 may be polarization sensitive to signals of the multi path. The polarimetric antenna array 12 may be provided in a 1x2 array configuration, comprising two antenna devices. Each of the antenna devices may comprise two antenna elements 16. The antenna devices may be configured as cross dipole antennas which may be placed side by side to form a linear array. The cross dipole antennas may be configured to receive signals with horizontal or vertical polarization angles. The signals r0(t) to r2(t) of the respective antenna elements 16 may be provided at respective antenna ports 18. By placing the two cross dipole antennas in a 1x2 array configuration, the polarimetric antenna array 12 may measure both horizontal and vertical polarization components of the multi path signal.

When the multipath signal is received by the polarimetric antenna array 12, it comprises direct and reflected path components that have traveled along different paths before reaching the polarimetric antenna array 12. The polarization state of each path component of the multipath signal may be different depending on a reflection angle in a multipath environment. Therefore, estimating the polarization state of each path component may be used to distinguish between the different paths comprising a direct path and reflected paths.

To identify the path components and to estimate the respective polarizations and AoAs, the controller device may comprise the first estimator 20. The first estimator 20 may be configured to estimate a covariance matrix of the multipath signal. The first estimator 20 may be configured to allocate a whole available signal bandwidth of the multipath signal to smooth the multi-path signal for the estimation of the covariance matrix.

The first estimator 20 may be configured to estimate the respective polarization ρ and/or the respective angle of arrival θ of the path components of the multi path signal, based on a Music algorithm or a capon beamformer. The first estimator 20 may be configured to generate a spectrum of the multi path signal over the polarization and the angle of arrival. The first estimator 20 may be configured to identify the path components of the multipath signal by applying a peak search algorithm on the spectrum. The peaks relate to respective path components.

The signal decomposer 22 is configured to decompose the multi path signal into the respective path components of the multi path signal. The decomposition may be performed by a selection of weight components w0, w1 of a capon filter. The decomposition may be performed for each of the identified path components. The signal decomposer 22 provides for each of the path components a respective isolated single path signal r'0(t), r'1(t).

The time of arrival estimator 24 is configured to estimate a time of arrival of each of the isolated single path signals. Therefore the time of arrival estimator 24 may be configured to perform an inverse fourier function on the frequency space of the respective isolated single path signal and to identify the time of arrival of the respective isolated single path signal.

The identifier is configured to compare the ToAs of the respective isolated single signal paths to determine the smallest time of arrival ToA min. The smallest time of arrival refers to the line of sight path component of the multi path signal.

As a further embodiment, more antennas and Rx chains could be used to increase the number of arrivals to be extracted. Rectangular, as well as circular or rotated Rx cross dipole pairs could be considered. Alternatively, any scheme of polarimetric antenna array 12 with any arbitrary but spatially coherent positioning (compact structure) is scaling our algorithm to detection of increased number of arrivals.

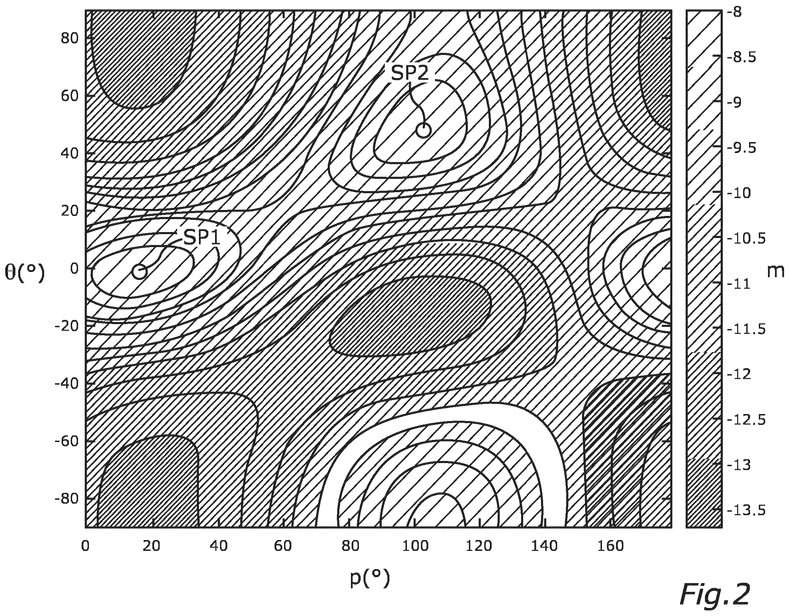

Fig. 2 shows a schematic illustration of an exemplary spectrum of the multipath signal over the angle of arrival θ and the polarisation ρ.

The approach to solve the problem of sub-meter accuracy using only 20MHz is an allocation of a whole available signal bandwidth of the multi path signal to smooth the multi-path signals for the covariance matrix creation of MVDR (Capon's Beamformer) algorithm or Music algorithm. MVDR (Capon's Beamformer) algorithm or Music algorithm are used to estimate the Angle of arrival and the Polarization of the impinging signals at the first step. The impinging signals relate to the path components of the multi path signal. Using the whole available 20MHz, it is possible to decorrelate the signals and to apply MVDR (or MUSIC) to get the superresolution estimate of AoA and polarization angle of the signals. A 2D derivative peak search may be applied to the spectrum to find the local maximums and saddle points, then by taking the 2D second derivative and application of Hessian metric, saddle points are eliminated. Then, we end up with estimated signal arrivals with AoA and polarization angle as demonstrated. The spectrum of Fig. 2 comprises two peaks relating to respective paths components SP1, SP2, which relate to two path components of the multi path signal.

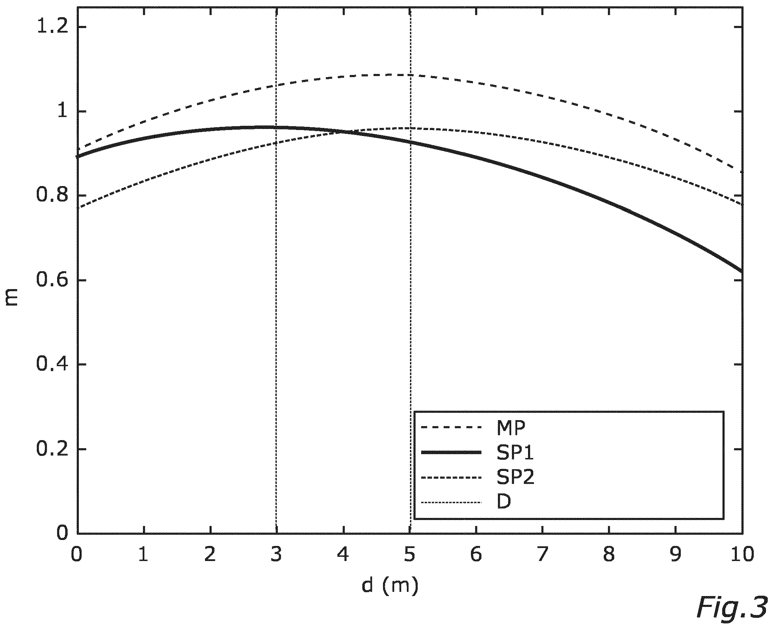

Fig. 3 shows a schematic illustration of the amplitudes of two single path signals in a time domain.

By using the AoAs and the polarizations of the respective path components, in a second round, a spatial and polarimetric digital filtering may be applied on the estimated path components, such that for the assumption of the two path components.

To decompose the isolated single path signal of the second path component from the multi path signal a digital filter places a null to the angle and polarization of the impinging signal estimate SP1 and places a unity gain in the spatial polarimetric digital filter to the arrival of estimate SP2.

Therefore single path signal of the second path is isolated as being impinging alone, as the single path signal of the first path is filtered out. Then, with a simple IFFT (also a super resolution could be applied), the time of arrival of single path signal of the second path may be estimated.

Then single path signal of the first path is isolated as being impinging alone, as the single path signal of the second path is filtered out. Then, with a simple IFFT (also a super resolution could be applied), the time of arrival of single path signal of the first path may be estimated.

The decomposed single path signals SP1, SP2 are plotted together with the multi path signal MP before the decomposition are given in Fig. 3.

After the decomposition step, each single path signal is isolated and with an IFFT, they are transferred into time domain. Here, the x-axis is translated into distance, by using ToA x (Speed of Light), to represent delay of the signals more conveniently.

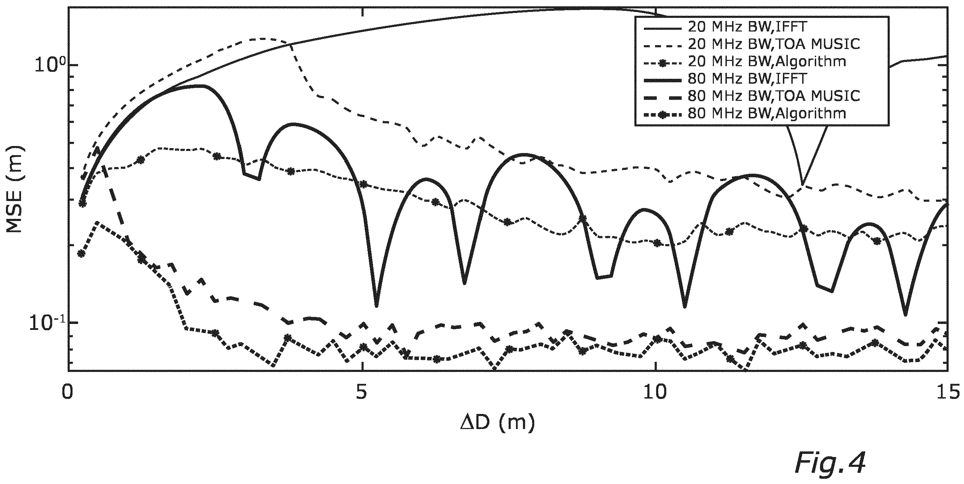

Fig. 4 shows a schematic illustration of a MSE based performance comparison.

The MSE based performance comparison between the state of the art and the approach, where the LOS is located at 3m and the MPC is positioned at the distance of 3m+ ΔD for the corresponding ΔD values at x-axis. A SNR is 10dB and 20 snapshots are acquired for the covariance matrix, at each of the 50 trials per ΔD. The AoA of the LOS and the MPC is at 0° and 45° respectively, where equally strong LOS and MPC are assumed for the comparison. The oscillatory behavior of IFFT is due to the sidelobes, acting as if they are LOS.

Here, it can be observe that with 20MHz signal bandwidth, the estimated performance is as stated, better than the TOA MUSIC, which represents the state of the art. Also, if the same technique is applied to 80MHz, it can be observed that it is also better than the ToA MUSIC. Therefore, the algorithm is scalable further bandwidth is available.

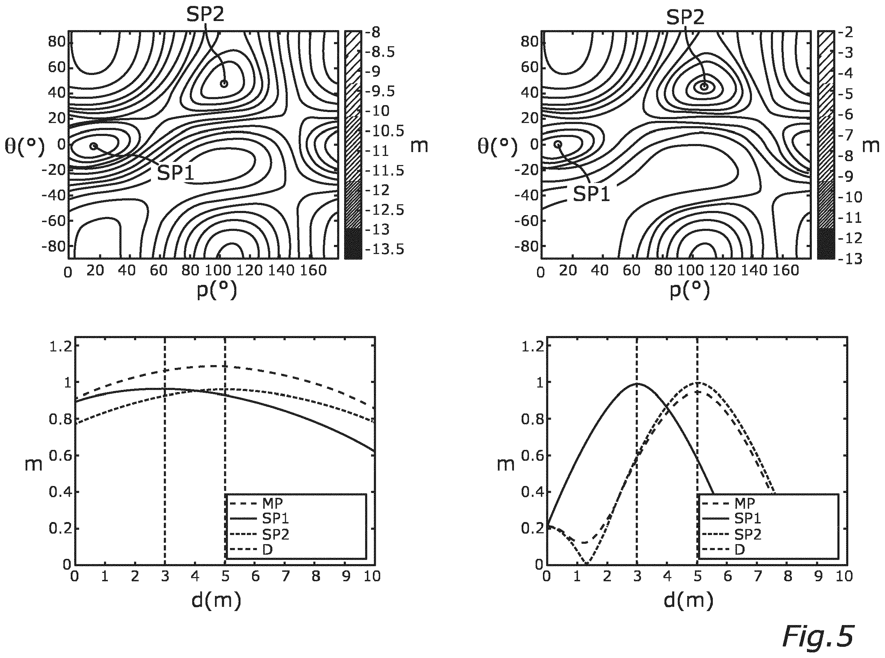

Fig. 5 shows a schematic illustration of a comparison between Simulation results with 20MHz bandwidth and 80MHz bandwidth.

Fig. 5 shows a comparison between Simulation results with 20MHz bandwidth and 80MHz bandwidth performance for comparison. 20MHz is the availability bandwidth for 5G Sidelink.

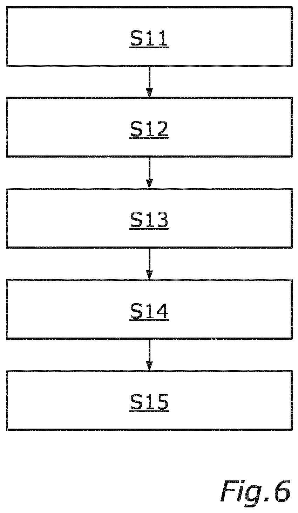

Fig. 6 shows a schematic illustration of a method to operate a receiver device 10 for estimating a first time of arrival of a multi path signal;

The method to operate a receiver device 10 for estimating a first time of arrival of a multi path signal may be performed by the receiver device 10 of Fig. 1. The method may comprise the following steps:
A first step S11 may comprise receiving the multi path signal by a polarimetric antenna array 12.

A second step S12 may comprise estimating a respective polarization and/or a respective angle of arrival of path components of the multi path signal by a first estimator 20.

A third step S13 may comprise decomposing the multi path signal into isolated single path signals of the respective path components of the multi path signal by a signal decomposer 22.

A fourth step S14 may comprise estimating a time of arrival of each of the isolated single path signals by a time of arrival estimator 24.

A fifth step S15 may comprise identifying the minimum time of arrival by an identifier.

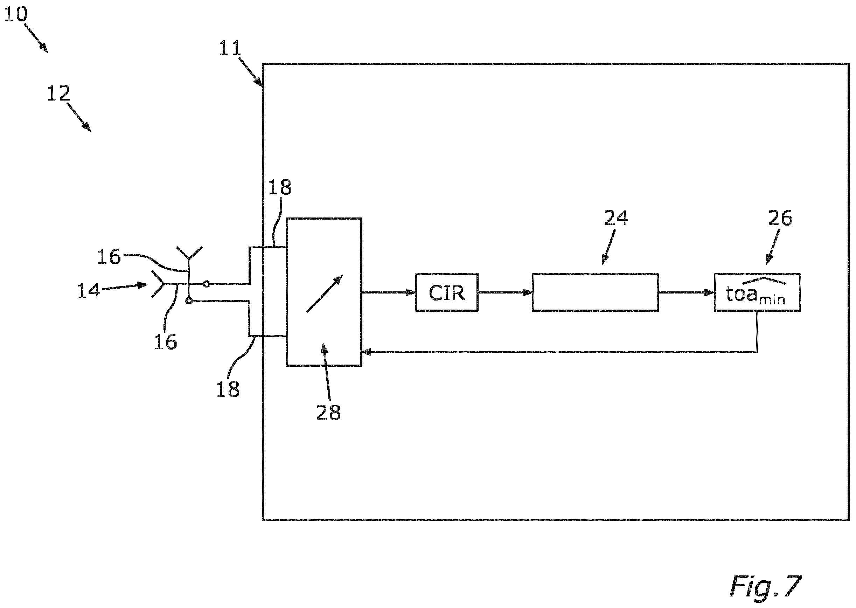

Fig. 7 shows a schematic illustration of an embodiment of the receiver device 10 for estimating a first time of arrival of a multi path signal.

The receiver device 10 for estimating a first time of arrival of a multi path signal, may comprises a polarimetric antenna 14 device and a controller device 11 comprising, a polarimetric filter device 28, a time of arrival estimator 24 and a first time of arrival identifier 26.

The polarimetric antenna 14 device is configured to receive the multi path signal.

The polarimetric filter device 28 is configured to decompose the multi path signal into isolated single path signals of respective polarization angles. The time of arrival estimator 24 is configured to estimate a time of arrival of each of the isolated single path signals. The identifier is configured to identify the minimum time of arrival.

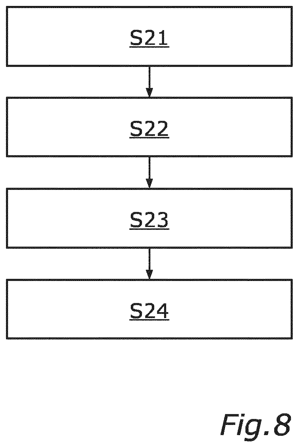

Fig. 8 shows a schematic illustration of a method to operate a receiver device 10 for estimating a first time of arrival of a multi path signal.

The method to operate a receiver device 10 for estimating a first time of arrival of a multi path signal, may be performed by the receiver device 10 of Fig. 7. The method may comprise the following steps.

A first step S21 may comprise receiving the multi path signal by a polarimetric antenna 14 device of the receiver device 10.

A second step S22 may comprise decomposing the multi path signal into isolated single path signals of respective polarization angles by a polarimetric filter device 28 of the receiver device 10.

A third step S23 may comprise estimating a time of arrival of each of the isolated single path signals by a time of arrival estimator 24.

A fourth step S24 may comprise identifying the minimum time of arrival by a first time of arrival identifier.

Overall, the example shows how multipath decomposition for enhanced Time-of-Arrival detection using compact polarimetric antenna arrays is provided by the invention.

### Reference signs

- 10: receiver device
- 11: controller device
- 12: polarimetric antenna array
- 14: polarimetric antenna
- 16: antenna element
- 18: antenna port
- 20: first estimator
- 22: signal decomposer
- 24: time of arrival estimator
- 26: first time of arrival identifier
- 28: polarimetric filter device

## Claims

1. Receiver device (10) for estimating a first time of arrival of a multi path signal, **characterized in that**
- the receiver device (10) comprises a polarimetric antenna array (12) and a controller device (11) comprising a first estimator (20), a signal decomposer (22), a time of arrival estimator (24) and a first time of arrival identifier (26);
- the polarimetric antenna array (12) is configured to receive the multi path signal;
- the first estimator (20) is configured to estimate a respective polarization and/or a respective angle of arrival of path components of the multi path signal received by the receiver device (10);
- the signal decomposer (22) is configured to decompose the multi path signal into isolated single path signals of the respective path components of the multi path signal;
- the time of arrival estimator (24) is configured to estimate a time of arrival of each of the isolated single path signals; and
- the first time of arrival identifier (26)is configured to identify the minimum time of arrival.

2. Receiver device (10) according to claim 1,
**characterized in that**
the first estimator (20) is configured to generate a capon spectrum of the multi path signal over the polarization and the angle of arrival using a capon beam former algorithm; and to identify the path components by a peak search algorithm applied on the capon spectrum.

3. Receiver device (10) according to claim 1,
**characterized in that**
the first estimator (20) is configured to generate a MUltiple Signal Classification spectrum of the multi path signal over the polarization and the angle of arrival using a MUltiple Signal Classification algorithm; and to identify the path components by a peak search algorithm applied on the MUltiple Signal Classification spectrum.

4. Receiver device (10) according to any one of the preceding claims, **characterized in that**
the first estimator (20) is configured to generate a covariance matrix of the multi path signal, wherein the first estimator (20) is configured to allocate a whole bandwidth of the multi path signal for smoothing the multi path signal to generate the covariance matrix of the multi path signal.

5. Receiver device (10) according to any one of the preceding claims, **characterized in that**
the signal decomposer (22) is configured to decompose the multi path signal into the isolated single path signals of the respective path components of the multi path signal by applying a spatial polarimetric digital filter placing a null to the angle of arrival and the polarization of the other path components of the multi path signal and placing a unity gain the spatial polarimetric digital filter to the angle of arrival and the polarization of the respective path component.

6. Receiver device (10) according to any one of the preceding claims, **characterized in that**
the polarimetric antenna array (12) comprises two cross dipole antenna devices arranged in a 1x2 array convention, wherein each of the two cross dipole antenna devices comprises two antenna elements (16) of respective polarizations.

7. Method to operate a receiver device (10) for estimating a first time of arrival of a multi path signal, comprising steps of:
- receiving the multi path signal by a polarimetric antenna array (12);
- estimating a respective polarization and/or a respective angle of arrival of path components of the multi path signal by a first estimator (20);
- decomposing the multi path signal into isolated single path signals of the respective path components of the multi path signal by a signal decomposer (22);
- estimating a time of arrival of each of the isolated single path signals by a time of arrival estimator (24), and
- identifying the minimum time of arrival by an identifier.

8. Receiver device (10) for estimating a first time of arrival of a multi path signal, **characterized in that**
- the receiver device (10) comprises a polarimetric antenna (14) device and a controller device (11) comprising, a polarimetric filter device (28), a time of arrival estimator (24) and a first time of arrival identifier (26);
- the polarimetric antenna (14) device is configured to receive the multi path signal;
- the polarimetric filter device (28) is configured to decompose the multi path signal into isolated single path signals of respective polarization angles
- the time of arrival estimator (24) is configured to estimate a time of arrival of each of the isolated single path signals, and
- the first time of arrival identifier (26) is configured to identify the minimum time of arrival.

9. Method to operate a receiver device (10) for estimating a first time of arrival of a multi path signal, comprising steps of:
- receiving the multi path signal by a polarimetric antenna (14) device of the receiver device (10);
- decomposing the multi path signal into isolated single path signals of respective polarization angles by a polarimetric filter device (28) of the receiver device (10);
- estimating a time of arrival of each of the isolated single path signals by a time of arrival estimator (24), and
- identifying the minimum time of arrival by a first time of arrival identifier (26).
